# EUROPÄISCHE PATENTSCHRIFT

(11) **EP 0 699 494 B1**
(45) Veröffentlichungstag und Bekanntmachung des Hinweises auf die Patenterteilung: **23.02.2000**
(21) Anmeldenummer: 95112847.9
(22) Anmeldetag: 16.08.1995
(51) Int. Cl.: B23C 3/05

(54) **Werkzeug**
Tool
Outil

(30) Priorität: 01.09.1994 DE 4431149
(43) Veröffentlichungstag der Anmeldung: 06.03.1996
(73) Patentinhaber: MAPAL Fabrik für Präzisionswerkzeuge Dr. Kress KG, D-73431 Aalen (DE)
(72) Erfinder:
(74) Vertreter: Gleiss & Grosse

(56) Entgegenhaltungen:
- EP-A- 0 323 044
- GB-A- 805 714
- US-A- 3 157 068
- US-A- 3 764 204
- US-A- 4 896 638
- US-A- 5 044 841

## Beschreibung

Die Erfindung betrifft ein Werkzeug, insbesondere ein Werkzeug zur spanabhebenden Feinbearbeitung von Metall, mit zwei ineinanderliegenden Teilwerkzeugen gemäß Oberbegriff des Anspruchs 1; siehe US-A 5 044 841.

Werkzeuge der hier angesprochenen Art werden auch als Feed-out-Systeme bezeichnet. Sie weisen ein als auch Werkzeugkopf bezeichnetes außenliegendes Werkzeug auf, in dessen Inneren ein auch als Innenwerkzeug bezeichnetes Teilwerkzeug axial, insbesondere in Richtung der Drehachse beider Teilwerkzeuge verschiebbar angeordnet ist. Der Werkzeugkopf wird über eine spezielle Spindel angetrieben, in dessen Inneren eine Innenspindel für den Antrieb des Innenwerkzeugs vorgesehen ist. Die Innenspindel ist in Richtung der Drehachse axial verlagerbar, so daß das Innenwerkzeug gegenüber dem Werkzeugkopf verschiebbar ist. Die für derartige Feed-out-Systeme vorgesehenen Spindeln sind sehr aufwendig gebaut und zeichnen sich durch eine große Länge aus. Daher ist der Preis derartiger Spindeln sehr hoch. Sie bedingen außerdem aufwendige Konstruktionen der Werkzeugmaschinen, bei denen derartige Feed-out-Systeme eingesetzt werden sollen. Ein weiterer gravierender Nachteil derartiger Systeme ist, daß die Werkzeuge derartiger Feed-out-systeme nur manuell wechselbar sind, wodurch lange und kostenintensive Umrüstzeiten erforderlich sind.

Es ist demgegenüber Aufgabe der Erfindung, ein Werkzeug der hier angesprochenen Art zu schaffen, das einen wesentlich einfacheren Aufbau aufweist und in automatischen Bearbeitungsstationen einsetzbar ist.

Diese Aufgabe wird bei einem Werkzeug der eingangs genannten Art mit Hilfe der in Anspruch 1 aufgeführten Merkmale gelost. Dadurch, daß die Teilwerkzeuge mit Kupplungen ausgestattet sind, die einen automatischen Wechsel des Werkzeuges ermöglichen, ist das die beiden Teilwerkzeuge umfassende Werkzeug universell einsetzbar, da spezielle Arbeitsschritte für den Wechsel nicht erforderlich sind. Verschiedene Werkzeuge dieser Art können sowohl in Transferstraßen als auch in automatischen Bearbeitungsstationen eingesetzt werden.

Durch den Formschluß der beiden Teilwerkzeuge ist sichergestellt, daß auf das außenliegende Werkzeug beziehungsweise den Werkzeugkopf einwirkende Antriebskräfte auf das innenliegende Werkzeug beziehungsweise das Innenwerkzeug übertragen werden. Das heißt, der Antrieb des innenliegenden Werkzeuges wird unmittelbar durch das außenliegende Werkzeug gewahrleistet, so daß spezielle Spindeln, wie sie bei bekannten Feed-out-Systemen erforderlich waren, nicht mehr Vorraussetzung für den Einsatz dieser Werkzeuge sind.

Bevorzugt wird ein Ausführungsbeispiel des Werkzeuges, bei dem der zwischen den Teilwerkzeugen gegebene Formschluß durch einen Vielkeil realisiert wird, der sich dadurch auszeichnet, daß Verschiebungen des innenliegenden Werkzeuges ohne Verkanten möglich sind.

Eine weitere bevorzugte Ausführungsform des Werkzeuges zeichnet sich dadurch aus, daß das innenliegende Werkzeug mit einem die Spindel für die Halterung des außenliegenden Werkzeuges durchgreifenden Antrieb verbunden ist, der eine Axialbewegung des innenliegenden Werkzeuges innerhalb des außenliegenden Werkzeuges ermöglicht. Besonders vorteilhaft ist es, daß für den eine Axialbewegung des innenliegenden Werkzeuges bewirkenden Antrieb ein herkömmlicher Hydraulikzylinder einsetzbar ist, so daß eine kostengünstige Realisierung dieser Ausführungsform möglich ist.

Weiterhin wird ein Ausführungsbeispiel des Werkzeugs bevorzugt, bei dem der die Axialbewegung des innenliegenden Werkzeuges bewirkende Antrieb in Rotation versetzbar ist und sich in gleicher Richtung mit gleicher Umfangsgeschwindigkeit dreht, wie das innenliegende Werkzeug. Dadurch werden Reibunskräfte zwischen dem Antrieb und dem innenliegenden Werkzeug vermieden, außerdem der Verschleiß der Kupplung für das inneliegende Werkzeug auf ein Minimum reduziert.

Bevorzugt wird außerdem eine Ausführungsform des Werkzeuges, bei dem das innenliegende Werkzeug mit einer Kühlmittelzufuhr koppelbar ist. Damit ist sichergestellt, daß das Werkzeug für herkömmliche Bearbeitungsverfahren einsetzbar ist.

Besonders wird bevorzugt, eine Ausführungsform des Werkzeuges, bei dem die Kühlmittelzufuhr automatisch an- und abkoppelbar ist. Damit bleibt die Möglichkeit erhalten, das Werkzeug mit den beiden ineinanderliegenden Teilwerkzeugen automatisch zu wechseln.

Besonders bevorzugt wird eine Ausführungsform des Werkzeuges, bei dem die Kühlmittelzufuhr mit dem die Axialbewegung des innenliegenden Werkzeuges bewirkenden Antrieb kombinierbar ist. Das heißt, der Antrieb wird als Hohlwelle ausgebildet, durch den Kühlmittel heranführbar ist. Eine derartige Ausführungsform zeichnet sich durch eine besonders kleine, kompakte Bauform aus.

Weitere Ausgestaltungen des Werkzeuges ergeben sich aus den übrigen Unteransprüchen.

Die Erfindung wird im folgenden anhand der Zeichnungen näher erläutert.

Es zeigen:
- Figur 1: eine Prinzipskizze des Werkzeuges mit Teilen einer Kühlmittelzufuhr sowie eines eine Axialbewegung des innenliegenden Werkzeuges bewirkenden Hydraulikeinrichtung;
- Figur 2: eine Prinzipskizze des Werkzeuges mit eingezogenem innenliegenden Werkzeug, und
- Figur 3: eine Seitenansicht eines weiteren Ausführungsbeispiels eines Werkzeugs.

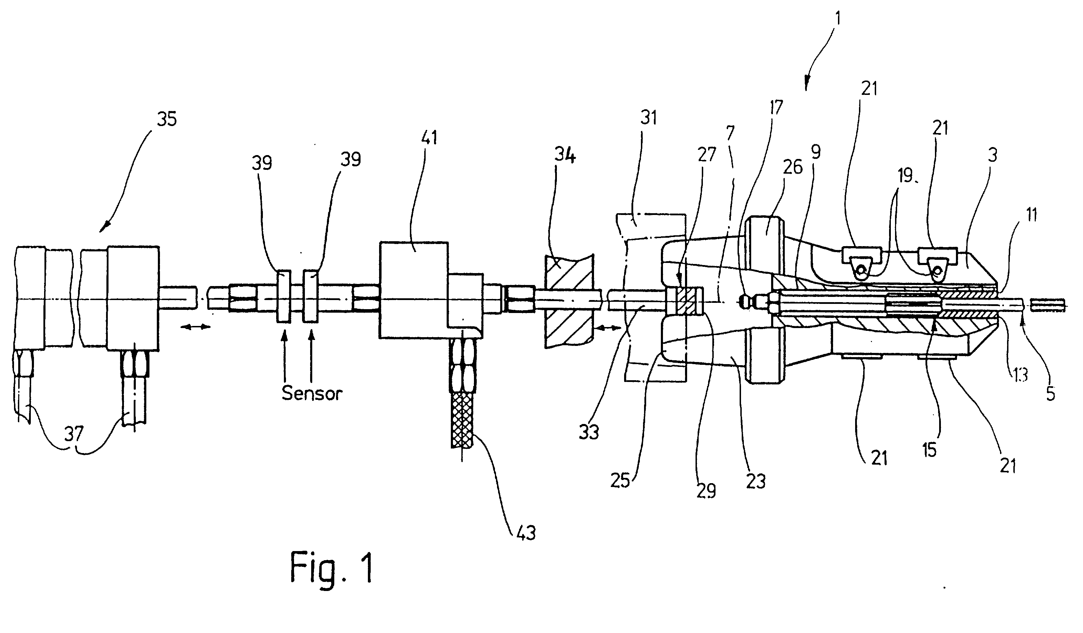

Figur 1 zeigt im Teilschnitt ein Werkzeug 1 mit zwei ineinanderliegenden Teilwerkzeugen, von denen das außenliegende Werkzeug im folgenden als Werkzeugkopf 3 und das innenliegende Werkzeug im folgenden als Innenwerkzeug 5 bezeichnet wird. Der Werkzeugkopf 3 zeigt eine mit seiner Mittel- bzw. Drehachse 7 zusammenfallende Bohrung 9, die der Aufnahme des Innenwerkzeuges 5 dient. Die Bohrung 9 durchläuft den Werkzeugkopf 3 auf ganzer Länge. In die Bohrung 9 ist im Bereich der Stirnseite 11 des Werkzeugkopfes 3 eine Büchse, vorzugsweise eine Hochgeschwindigkeits-Führungsbüchse, eingesetzt, deren Außendurchmesser im wesentlichen dem Innendurchmesser der Bohrung 9 entspricht und deren Innendurchmesser auf den Außendurchmesser des Innenwerkzeuges 5 so abgestimmt ist, daß diese von der Büchse 13 auch bei hohen Drehgeschwindigkeiten optimal geführt und gehalten wird. Die Büchse 13 dient insbesondere dazu, eine seitliche Ausweichbewegung des Innenwerkzeuges 5 zu vermeiden.

Das Innenwerkzeug 5 kann beispielsweise als Reibahle ausgebildet sein und beispielsweise an seiner vorderen Spitze mit mindestens einer Messerplatte und gegebenfalls zugehörigen Führungsleisten ausgestattet sein. Es kann beispielsweise der Innenbearbeitung von Ventilführungen und -sitzen im Zylinderkopf einer Brennkraftmaschine dienen. Die Büchse 13 ist so ausgebildet, daß das Innenwerkzeug 5 vollständig in das Innere des Werkzeugkopfes 3 hineinverlagert werden kann. Hier ist das Innenwerkzeug 5 in seiner vollständig aus dem Werkzeugkopf 3 herausgefahrenen Position dargestellt.

Das Innenwerkzeug 5 ist mit einem Antriebselement 15 versehen, das mit der Innenfläche der Bohrung im Werkzeugkopf 3 in Formschluß steht. Auf diese Weise wird eine Drehbewegung des Werkzeugkopfes 3 unmittelbar auf das Innenwerkzeug 5 übertragen, das heißt, es bedarf keines separaten Antriebs des Innenwerkzeuges 5, insbesondere keiner Innenspindel, die bei Feed-out-Systemen herkömmlicher Art erforderlich war.

Besonders bevorzugt wird ein als Vielkeilwelle ausgebildetes Antriebselement 15, da eine derartige Ausgestaltung ein Verkeilen und/oder Verkanten des Innenwerkzeuges 5 innerhalb des Werkzeugkopfes 3 bei einer Axialbewegung sicher vermeidet.

An seinem rückwärtigen Ende ist das Innenwerkzeug 5 mit einer hier als Stecktülle 17 ausgebildeten Kupplungseinrichtung ausgestattet. Die Stecktülle ist so ausgebildet, daß ein eine Axialbewegung des Innenwerkzeuges 5 bewirkender Antrieb angekoppelt werden kann, wobei gleichzeitig ein in einem hier nicht dargestellten Innenkanal des Innenwerkzeuges 5 eingespeistes Kühl- oder Schmiermittel zuführbar ist.

Der Werkzeugkopf 3 kann beliebig ausgestaltet sein. Hier sind beispielhaft an der Umfangfläche des Werkzeugkopfes 3 von geeigneten Spannpratzen 19 gehaltene Messerplatten 21 erkennbar. Messerplatten 21 können auch an der Stirnseite 11 des Werkzeugkopfes vorgesehen sein, dessen Außenkonturen im übrigen beliebig ausgestattet sein können.

Auf der der Stirnseite 11 gegenüberliegenden Seite ist der Werkzeugkopf 3 mit einem üblichen Spannschaft, hier mit einem Hohlschaft 23 versehen, der sich zur Endfläche 25 hin verjüngt. Der Hohlschaft 23 wird durch einen üblichen Anlagering 26 begrenzt.

Die Stecktülle 17 liegt im Inneren des Hohlschafts 23 und ist damit für ein Kupplungselement 27 zugänglich, das hier als Schnellverschlußkupplung ausgebildet ist und einen in Richtung der Drehachse 7 verschiebbaren Kupplungsring 29 aufweist.

Der Hohlschaft 23 ist wie bei herkömmlichen Werkzeugen ausgebildet und kann von einer bekannten Spannvorrichtung 31, die hier nur angedeutet ist, erfaßt werden.

Das Kupplungselement 27 ist am Ende einer in axialer Richtung, das heißt in Richtung der Drehachse 7 verlagerbaren Antriebseinrichtung 33 angeordnet, die beispielsweise mit einem Hydraulikzylinder 35 kraftschlüssig verbunden ist, der hier nur angedeutet ist und entsprechende Zu- und Ableitungen 37 aufweist. Die Antriebseinrichtung 33 dient der axialen Verlagerung des Innenwerkzeuges 5 im Werkzeugkopf 3. Bei der Darstellung gemäß Figur 1 sind das Kupplungselement 27 von der Stecktülle 17 und das Werkzeug 1 von der Spannvorrichtung 31 abgekoppelt.

Die Antriebseinrichtung 33 ist an beliebiger Stelle mit vorzugsweise verstellbaren Anschlägen 39 versehen, die der Begrenzung der axialen Bewegung der Antriebseinrichtung dienen und für eine definierte Axialbewegung und der Antriebseinrichtung 33 sorgen. Der linke Anschlag kann beispielsweise die Ausziehbewegung der Antriebseinrichtung 33 nach links begrenzen; der rechte Anschlag kann dazu dienen, die Bewegung der Antriebseinrichtung 33 nach rechts zu begrenzen. Der rechte Anschlag kann auch dazu dienen, die Antriebseinrichtung 33 über eine vorgegebene Endstellung hinaus etwas nach rechts zu verlagern, um den Kupplungsring 29 in eine Entriegelungsstellung zu verlagern, so daß die Stecktülle 17 für einen automatischen Wechsel des Werkzeuges 1 freigegeben wird. Hierfür kann auch gegebenenfalls ein dritter Anschlag vorgesehen werden, der hier nicht dargestellt ist. Die Anschlage konnen hier mechanisch abgetastet werden oder mit geeigneten Sensoren zusammenwirken, die über eine Steuereinrichtung die Antriebseinrichtung 33 bzw. den Hydraulikzylinder 35 steuern.

Vorzugsweise wird die Antriebseinrichtung 33 mit einer Steuerung der Spannvorrichtung 31 gekoppelt, so daß bei einer Freigabe des Hohlschafts 23 des Werkzeugkopfs 3 auch eine Freigabe der Stecktülle 17 durch das Kupplungselement 27 erfolgt. Auf diese Weise wird ein automatischer Wechsel des Werkzeuges 1 ermöglicht, bei dem sowohl der Werkzeugkopf 3 als auch das Innenwerkzeug 5 automatisch abgekoppelt und ausgetauscht werden können.

Nach dem Abnehmen des Werkzeuges 1 von der Spannvorrichtung 31 kann der Werkzeugkopf allein ausgetauscht werden, beispielsweise gegen einen mit einer gegenüber Figur 1 abweichenden Außenkontur. Auch ist es möglich, in den Werkzeugkopf 3 verschieden ausgebildete Innenwerkzeuge 5 einzusetzen. Gegebenenfalls muß auch die Büchse 13 ausgetauscht werden, um eine Abstimmung an den Außendurchmesser des Innenwerkzeugs zu gewahrleisten.

Bei einem Wechsel des Werkzeugs 1 kann das Innenwerkzeug 5 gegen Herausfallen aus dem Werkzeugkopf 3 gesichert werden, beispielsweise durch einen O-Ring, einen in die Bewegungsbahn des Antriebselements 15 ragenden Stift oder eine federnd gelagerte Rastkugel.

Figur 1 zeigt, daß die Antriebseinrichtung 33 mindestens ein radiales Lager 34 aufweist, das eine Axialverschiebung der Antriebseinrichtung 33 ermöglicht. Zusätzlich ist eine Drehdurchfuhrung 41 vorgesehen, die von der Antriebseinrichtung 33 durchdrungen wird und die Einleitung einer Spül- und Kuhlmittelzufuhr über eine Leitung 43 ermöglicht. Das Spul- und Kühlmittel wird über die Antriebseinrichtung 33 zum Werkzeug 1 geführt, hier in das Innere des Innenwerkzeugs 5 eingeleitet und auf bekannte Weise in die Bereiche gefördert, in denen das Werkzeug 1 ein Werkstück bearbeitet.

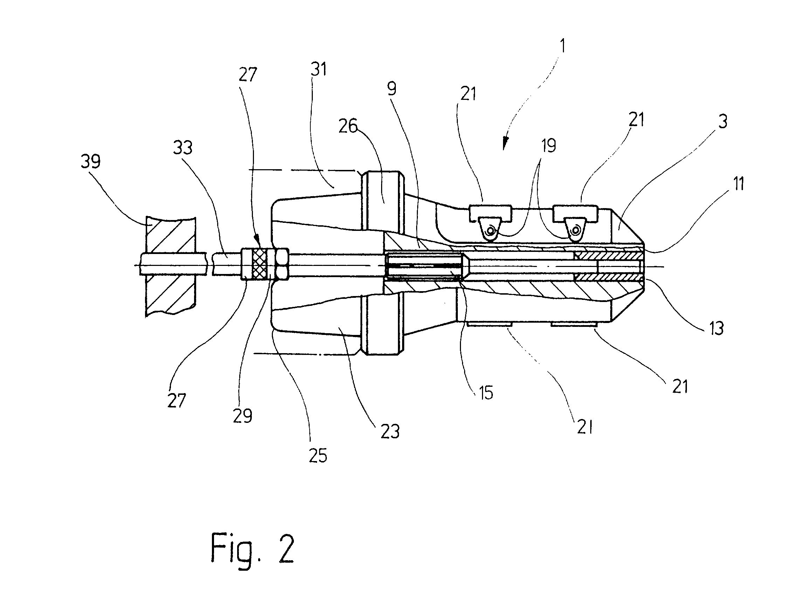

Figur 2 zeigt den anhand von Figur 1 erläuterten Werkzeugkopf 3, der hier allerdings in die Spannvorrichtung 31 eingesetzt ist. Auch das Innenwerkzeug 5 ist mit dem Kupplungselement 27 und damit mit der Antriebseinrichtung 33 verbunden. Gleiche Teile sind mit gleichen Bezugsziffern versehen, so daß auf die Beschreibung in Figur 1 verwiesen werden kann.

Bei der Befestigung des Werkzeugs 1 an der Spannvorrichtung 31 greifen auf bekannte Weise herkömmliche Spanneinrichtungen in das Innere des Hohlschafts 23 und stellen damit eine sichere Verbindung zwischen Werkzeug 1 und Spannvorrichtung 31 her. Die Spannvorrichtung kann Teil einer herkömmlichen Werkzeugspindel sein.

Das Innenwerkzeug 5 ist bei der Darstellung in Figur 2 in seine vollständig zurückgefahrene Position verlagert worden, indem die Antriebseinrichtung 33 durch den in Figur 1 dargestellten Hydraulikzylinder 35 ganz nach links verschoben wurde. Bei der axialen Verlagerung des Innenwerkzeugs 5 wird die Zufuhr von Kühl- und Spülmittel über die Antriebseinrichtung 33 nicht unterbrochen. Dies kann allerdings, wenn gewünscht, auf geeignete Weise bewerkstelligt werden.

Auch in der zurückgefahrenen Position befindet sich das Innenwerkzeug 5 in Formschluß mit dem Werkzeugkopf 3, das heißt, Drehbewegungen, die mittels der Spannvorrichtung 31 auf den Werkzeugkopf 3 übertragen werden, bewirken einen unmittelbaren Antrieb des Innenwerkzeugs 5 über das Antriebselement 15.

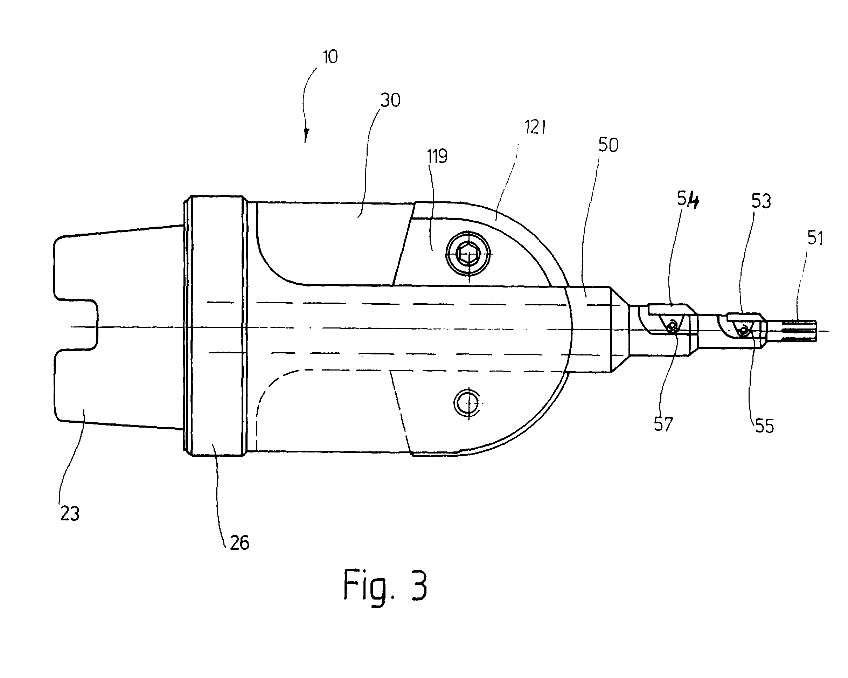

Figur 3 zeigt in Seitenansicht ein weiteres Ausfuhrungsbeispiel eines Werkzeugs 10, das aus zwei ineinanderliegenden Teilwerkzeugen, nämlich einem außen liegenden Werkzeugkopf 30 und einem innen liegenden Innenwerkzeug 50 besteht.

Werkzeugkopf 30 und Innenwerkzeug 50 sind grundsätzlich gleich aufgebaut wie der anhand der Figuren 1 und 2 dargestellte Werkzeugkopf 3 beziehungsweise das Innenwerkzeug 5, insbesondere wird das Innenwerkzeug 50 unmittelbar durch den Werkzeugkopf 30 angetrieben, weil im Inneren des Werkzeugkopfs 30 ein Formschluß mit dem Innenwerkzeug 50 gewährleistet ist.

Auf der Außenseite des Werkzeugkopfs 30, dessen Vorderseite abgerundet ist, findet sich eine Messerplatte 121, die von einer geeigneten Spannpratze 119 gehalten wird.

Das Innenwerkzeug 50 ist hier als Stufenwerkzeug aufgebaut und weist an seiner Vorderseite beispielshaft eine Reibahle 51 auf, und ist an seinem sich an die Reibahle anschließenden Bereich, der einen größerem Außendurchmesser aufweist, mit einer von einer geigneten Spannpratze 55 gehaltenen Messerplatte 53 versehen. Der nächste Abschnitt des Innenwerkzeugs 50 weist wiederum einen größeren Außendurchmesser auf und ist seinerseits mit einer Messerplatte 54 versehen, die von einer Spannpratze 57 gehalten wird.

Die Ausgestaltung sowohl des Werkzeugkopfes 30 als auch die des Innenwerkzeuges 50 ist hier nur beispielhaft erläutert; sie kann beliebig gewählt werden. Bei einem großeren Außendurchmesser des Innenwerkzeugs 50 bedarf es einer entsprechend größeren Bohrung im Inneren des Werkzeugkopfes 30 und einer entsprechenden Anpassung der Büchse 13. Es ist auch denkbar, daß die Innenbohrung im Werkzeugkopf für verschiedene Innenwerkzeuge eine konstante Dimensionierung aufweist, und daß lediglich verschiedene Büchsen mit unterschiedlichen Innendurchmessern eingesetzt werden müssen, die an das jeweilige Innenwerkzeug angepaßt sind. In allen Fällen ist wesentlich, daß der Antrieb des Innenwerkzeugs unmittelbar - aufgrund des Formschlusses - durch eine Drehbewegung des Werkzeugkopfes erfolgt.

Der Werkzeugkopf 30 weist an seinem linken Ende beispielsweise einen Hohlschaft 23 auf, an den sich ein Anlagering 26 anschließt.

Im folgenden wird auf die Funktion des als Feed-out-System wirkenden Werkzeuges 1, 10, näher eingegangen:

Bei der Bearbeitung von Bohrungen, insbesondere bei der Innenbearbeitung von tiefen Bohrungen kleinen Durchmessers (8,6,5 mm), wie sie beispielsweise bei Ventilführungen gegeben sind, taucht das Problem auf, daß ein sehr langes, auskragendes Innenbearbeitungswerkzeug verwendet werden muß, das beim ersten Einführen in die zu bearbeitende Bohrung leicht aus der Sollage abgelenkt wird, so daß die gewünschten Bohrüngsmaße und -qualitäten nicht eingehalten werden können. Um diesen Nachteil zu vermeiden, werden derartige Bohrungen häufig in einem vorgeschalteten Bearbeitungsgang mit einem sogenannten Piloten bearbeitet, wobei nur ein erster Abschnitt der Bohrung einer Innenbearbeitung unterworfen wird. In diese vorbearbeitete Bohrung kann dann in dem nachfolgenden Bearbeitungsschritt das letztlich einzusetzende Innenbearbeitungswerkzeug eingeführt werden, ohne daß es zu den ungewünschten Ablenkungen kommt. Es bedarf also des Einsatzes zweier verschiedender Werkzeuge.

Bei dem hier beschriebenen Werkzeug wird der Werkzeugkopf 3, 30 über die Spannvorrichtung 31 mit einer Antriebskraft beaufschlagt und in Rotation versetzt. Das Innenwerkzeug 5, 50 befindet sich in seiner vollständig zurückgezogenen Position. In dieser Lage wird das Werkzeug 1, 10 an die zu bearbeitende Bohrung herangeführt. Es ist möglich, daß bei der Ausführungsform des Werkzeugkopfs 30, wie sie in Figur 3 dargestellt ist, eine erste Bearbeitung der Werkstückoberfläche erfolgt. Dann wird der Werkzeugkopf, falls gewünscht, etwas zurückgefahren und das Innenwerkzeug 5, 50 mit Hilfe der Antriebseinrichtung 33 axial verlagert und in Richtung der zu bearbeitenden Werkstücke ausgefahren. Dabei gelangt die vorderste Spitze des Innenwerkzeugs 5, 50 mit der zu bearbeitenden Bohrung in Eingriff. Da das Innenwerkzeug jedoch eine nur geringe ausladende Länge aufweist, findet eine sichere Führung durch die Büchse 13 statt, so daß auch der Anfangsbereich der zu bearbeitenden Bohrung eine hervorragende Maßhaltigkeit und die gewünschten Oberflächenqualitäten aufweist. Mittels der Antriebseinrichtung 33 wird nun das Innenwerkzeug 5, 50 auf die gewünschte Länge ausgefahren. Dabei kann das Innenwerkzeug in jeder beliebigen Position angehalten werden. Durch die spezielle Ausgestaltung des Formschlusses zwischen Werkzeugkopf 3, 30 und Innenwerkzeug 5, 50 wird sichergestellt, daß die Antriebskräfte vom Werkzeugkopf 3, 30 immer auf das Innenwerkzeug 5, 50 übertragen werden.

Es ist ohne weiteres ersichtlich, daß während der Bearbeitung des Werkstücks durch die Kühl- und Spülmittelzufuhr eine Kühlung sowohl des Werkzeugs 1, 10 als auch des bearbeiteten Werkstücks erfolgt und die anfallenden Späne abgeführt werden.

Aufgrund des speziellen Aufbaus der Antriebseinrichtung 33 und der Drehdurchführung 41 mit der Kühlmittelzufuhr kann in allen Positionen des Innenwerkzeugs 5, 50 Kühlmittel angeliefert werden. Trotz allem zeichnet sich das Werkzeug 1, 10 durch einen sehr kompakten Aufbau aus.

Wesentlich ist, daß bei einer Bearbeitung eines Werkstücks nach dem hier beschriebenen Verfahren besonders hohe Bearbeitungsqualitäten erreicht werden, so daß das Werkzeug 1, 10 insbesondere für die Feinbearbeitung von Bohrungen einsetzbar ist.

Das Werkzeug kann bei einer Transferstraße oder bei einer automatischen Bearbeitungsstation leicht automatisch gewechselt werden. Es ist auch möglich, beliebige Werkzeugköpfe 3, 30 mit beliebigen Innenwerkzeugen 5, 50 zu kombinieren, wobei verschiedene Außendurchmesser des Innenwerkzeugs durch eine entsprechende Auswahl der Büchsen ermöglicht ist. Besonders bevorzugt werden in allen Fällen gleichartig ausgebildete Antriebselemente 15 gewählt, so daß insofern eine Anpassung des Werkzeugkopfes 3, 30 nicht erforderlich ist.

Da das Innenwerkzeug 5, 50 unmittelbar vom Werkzeugkopf 3, 30 angetrieben wird, baut das Werkzeug 1, 10 besonders kurz. Insbesondere bedarf es keiner speziellen Anpassung der der Aufnahme des Werkzeugs 1, 10 dienenden Spannvorrichtung 31.

Die Realisierung der Antriebseinrichtung 33 ist auch in Kombination mit der Drehdurchführung 41 für die Zufuhr von Spül- und Kühlmitteln leicht möglich. Es bedarf lediglich der Einbringung einer axial verschieblichen Stange, die zumindest ab der Drehdurchführung 41 hohl ist, um das Kühlmittel zum Werkzeug durchzulassen. Die Verlagerung der Stange kann dann ohne weiteres mittels herkömmlicher Hydraulikzylinder 35 durchgeführt werden. Für die Halterung des Werkzeugs 1, 10 können ansonsten herkömmliche Spannvorrichtungen 31 verwendet werden, die wesentlich einfacher aufgebaut sind als die bei bekannten Feed-out-Systemen eingesetzten Spezialspindeln. Die Spannvorrichtung 31 ist insbesondere Teil einer bekannten Werkzeugspindel, die leicht für die Durchführung einer Antriebseinrichtung 33 umrüstbar ist.

Besonders bevorzugt wird eine Ausführungsform der Antriebseinrichtung 33, die gemeinsam mit der Werkzeugspindel beziehungsweise Spannvorrichtung 31 in Rotation versetzt wird, so daß im Bereich der Kupplungseinrichtung beziehungsweise des Kupplungselements 27 keine Reibung und damit auch kein Verschleiß auftreten. Die Drehbewegung der Antriebseinrichtung 33 kann auch dadurch bewirkt werden, daß das Innenwerkzeug 5, 50 im Bereich der Stecktülle 17 auf geeignete Weise in Formschluß mit dem Kupplungselement 27 tritt und dieses mitdreht. Bevorzugt wird allerdings eine Entlastung des Kupplungsbereichs, in dem, wie gesagt, die Antriebseinrichtung 33 an anderer Stelle mit einer Antriebskraft beaufschlagt und in Rotation versetzt wird.

Schließlich soll noch einmal herausgestellt werden, daß durch den unmittelbar innerhalb des Werkzeugs 1, 10 erfolgenden Antrieb des Innenwerkzeugs 5, 50 auf einen separaten Antrieb des Innenwerkzeugs verzichtet werden kann, so daß die Spannvorrichtung 31 Teil einer herkömmlichen Werkzeugspindel sein kann und insbesondere ein automatischer Wechsel des Werkzeugs 1, 10 bewerkstelligt werden kann, wie dies bei herkömmlichen Werkzeugen der Fall ist, die nicht im Rahmen von Feed-out-Systemen verwendet wurden. Damit ist das Werkzeug 1,10 universell im Bereich von Transferstraßen und Bearbeitungszentren einsetzbar.

## Patentansprüche

1. Werkzeug, insbesondere für spanabhebende Feinbearbeitung von Metall, mit zwei ineinanderliegenden Teilwerkzeugen, von denen das innenliegende Innenwerkzeug innerhalb des außenliegenden Werkzeugkopfes verschiebbar angeordnet ist, **dadurch gekennzeichnet**, daß das Innenwerkzeug (5, 50) durch Formschluß so mit dem Werkzeugkopf (3, 30) gekoppelt ist, daß auf den Werkzeugkopf (3, 30) wirkende Antriebskräfte auf das Innenwerkzeug (5, 50) übertragbar sind, und daß die Teilwerkzeuge (3, 5, 30, 50) mit Kupplungen ausgestattet sind, die einen automatischen Wechsel des Werkzeuges (1, 10) ermöglichen.

2. Werkzeug nach Anspruch 1, **dadurch gekennzeichnet**, daß der Formschluß durch ein vorzugsweise als Vielkeil ausgebildetes Antriebselement (15) gegeben ist.

3. Werkzeug nach einem der vorhergehenden Ansprüche, **dadurch gekennzeichnet**, daß das Innenwerkzeug (5;50) mit einer eine Axialbewegung innerhalb des Werkzeugkopfs (3;30) bewirkenden Antriebseinrichtung (33) verbunden ist.

4. Werkzeug nach Anspruch 3, **dadurch gekennzeichnet**, daß die Antriebseinrichtung (33) einen Hydraulikzylinder (35) umfaßt.

5. Werkzeug nach Anspruch 3 oder 4, **dadurch gekennzeichnet**, daß die Antriebseinrichtung (33) in Rotation versetzbar ist und vorzugsweise in gleicher Richtung und mit gleicher Umfangsgeschwindigkeit wie das Innenwerkzeug (5;50) rotiert.

6. Werkzeug nach einem der vorhergehenden Ansprüche, **dadurch gekennzeichnet**, daß der Werkzeugkopf (3;30) oder vorzugsweise das Innenwerkzeug (5;50) mit einer Kühlmittelzufuhr koppelbar ist.

7. Werkzeug nach Anspruch 6, **dadurch gekennzeichnet**, daß die Kühlmittelzufuhr automatisch an- und abkoppelbar ist.

8. Werkzeug nach Anspruch 6 oder 7, **dadurch gekennzeichnet**, daß die Kühlmittelzufuhr mit der die Axialbewegung des Innenwerkzeugs (5;50) bewirkenden Antriebseinrichtung kombinierbar ist.

9. Werkzeug nach einem der vorhergehenden Ansprüche, **dadurch gekennzeichnet**, daß der Werkzeugkopf (3;30) eine konzentrisch zur Drehachse (7) verlaufende, das Innenwerkzeug (5;50) aufnehmende Bohrung (9) aufweist.

10. Werkzeug nach Anspruch 9, **dadurch gekennzeichnet**, daß die Bohrung (9) mit einer, der Führung und Lagerung des Innenwerkzeugs (5;50) dienende Büchse (13) aufweist.

11. Werkzeug nach einem der vorhergehenden Ansprüche, **dadurch gekennzeichnet**, daß der Werkzeugkopf (3;30) mit einem Hohlschaft (23) versehen ist, der dem An- und Abkoppeln an eine Spannvorrichtung (31) dient.

12. Werkzeug nach einem der vorhergehenden Ansprüche, **dadurch gekennzeichnet**, daß der Werkzeugkopf (3;30) mit verschiedenen Innenwerkzeugen (5;50) kombinierbar ist.

13. Werkzeug nach einem der vorhergehenden Ansprüche, **dadurch gekennzeichnet**, daß das Innenwerkzeug (5;50) mit verschiedenen Werkzeugköpfen (3;30) kombinierbar ist.

## Claims

1. A tool, in particular for the chip-removing fine machining of metal, comprising two sub-tools one inside the other, of which the inner tool is displaceably arranged inside the outer tool head, characterised in that the inner tool (5, 50) is positively connected to the tool head (3, 30) in such a manner that driving forces acting on the tool head (3, 30) are transmittable to the inner tool (5, 50), and in that the sub-tools (3, 5, 30, 50) are provided with couplings which allow automatic replacement of the tool (1, 10).

2. A tool according to claim 1, characterised in that the positive connection is produced by a driving element (15) preferably formed as a splined element.

3. A tool according to any one of the preceding claims, characterised in that the inner tool (5, 50) is connected to a driving arrangement (33) producing an axial movement inside the tool head (3, 30).

4. A tool according to claim 3, characterised in that the driving arrangement (33) comprises a hydraulic cylinder (35).

5. A tool according to claim 3 or 4, characterised in that the driving arrangement (33) can be set into rotation and preferably rotates in the same direction and at the same circumferential speed as the inner tool (5, 50).

6. A tool according to any one of the preceding claims, characterised in that the tool head (3, 30) or preferably the inner tool (5, 50) is connectable to a coolant supply.

7. A tool according to claim 6, characterised in that the coolant supply is automatically connectable and disconnectable.

8. A tool according to claim 6 or 7, characterised in that the coolant supply is combinable with the driving arrangement producing the axial movement of the inner tool (5, 50).

9. A tool according to any one of the preceding claims, characterised in that the tool head (3, 30) has a bore (9) extending concentrically with the rotation axis (7) and receiving the inner tool (5, 50).

10. A tool according to claim 9, characterised in that the bore (9) is provided with a bush (13) serving to guide and receive the inner tool (5, 50).

11. A tool according to any one of the preceding claims, characterised in that the tool head (3, 30) is provided with a hollow shaft (23) allowing connection to and disconnection from a clamping device (31).

12. A tool according to any one of the preceding claims, characterised in that the tool head (3, 30) is combinable with different inner tools (5, 50).

13. A tool according to any one of the preceding claims, characterised in that the inner tool (5, 50) is combinable with different tool heads (3, 30).

## Revendications

1. Outil, notamment pour l'usinage de finition de métaux par enlèvement des copeaux, avec deux outils partiels emboîtés l'un dans l'autre, dont l'outil intérieur est placé de façon déplaçable dans la tête d'outil extérieure, **caractérisé en ce que** l'outil intérieur (5, 50) est couplé à la tête d'outil (3, 30) par liaison par conjugaison de forme de telle sorte que les forces d'entraînement agissant sur la tête d'outil (3, 30) sont transmissibles à l'outil intérieur (5, 50) et en ce que les outils partiels (3, 5, 30, 50) sont munis de couplages permettant un changement automatique d'outil (1, 10).

2. Outil selon la revendication 1, **caractérisé en ce que** la liaison par conjugaison de forme est réalisée par un élément d'entraînement (15) formé de préférence comme clavette multiple.

3. Outil selon l'une des revendications précédentes, **caractérisé en ce que** l'outil intérieur (5, 50) est relié à un dispositif d'entraînement (33) produisant dans la tête d'outil (3, 30) un mouvement axial.

4. Outil selon la revendication 3, **caractérisé en ce que** le dispositif d'entraînement (33) comprend un cylindre hydraulique (35).

5. Outil selon la revendication 3 ou 4, **caractérisé en ce que** le dispositif d'entraînement (33) peut être mis en rotation et tourne de préférence dans le même sens et à la même vitesse circonférentielle que l'outil intérieur (5, 50).

6. Outil selon l'une des revendications précédentes, **caractérisé en ce que** la tête d'outil (3, 30) ou de préférence l'outil intérieur (5, 50) peut être couplé(e) à une alimentation réfrigérante.

7. Outil selon la revendication 6, **caractérisé en ce que** l'alimentation réfrigérante peut être couplée et découplée automatiquement.

8. Outil selon la revendication 6 ou 7, **caractérisé en ce que** l'alimentation réfrigérante peut être combinée avec le dispositif d'entraînement provoquant le mouvement axial de l'outil intérieur (5, 50).

9. Outil selon l'une des revendications précédentes, **caractérisé en ce que** la tête d'outil (3, 30) présente un perçage (9) s'étendant de façon concentrique par rapport à l'axe de rotation (7) et logeant l'outil intérieur (5, 50).

10. Outil selon la revendication 9, **caractérisé en ce que** le perçage (9) présente une douille (13) servant au guidage et au logement de l'outil intérieur (5, 50).

11. Outil selon l'une des revendications précédentes, **caractérisé en ce que** la tête d'outil (3, 30) est munie d'un arbre creux (23) servant au couplage à un dispositif de serrage (31) et au découplage de celui-ci.

12. Outil selon l'une des revendications précédentes, **caractérisé en ce que** la tête d'outil (3, 30) peut être combinée à différents outils intérieurs (5, 50).

13. Outil selon l'une des revendications précédentes, **caractérisé en ce que** l'outil intérieur (5, 50) peut être combiné à différentes têtes d'outil (3, 30).
